# EUROPEAN PATENT SPECIFICATION

(11) **EP 0 646 757 B1**
(45) Date of publication and mention of the grant of the patent: **02.12.1998**
(21) Application number: 94912674.2
(22) Date of filing: 14.04.1994
(51) Int. Cl.: F27B 3/08, F27B 3/18, F27D 11/10, F27D 13/00, C21C 5/52

(54) **DC ARC FURNACE**
GLEICHSTROMLICHTBOGENOFEN
FOUR A ARC CC

(30) Priority: 15.04.1993 JP 88803/93
(43) Date of publication of application: 05.04.1995
(73) Proprietor: ISHIKAWAJIMA-HARIMA JUKOGYO KABUSHIKI KAISHA, Chiyoda-ku Tokyo 100 (JP)
(72) Inventor: YOSHIDA, Hironobu, Urayasu-shi, Chiba 279 (JP); TSUKIZAKI, Shinichi, Chiba-shi, Chiba 263 (JP)
(74) Representative: Jennings, Nigel Robin
(86) International application number: PCT/JP94/00617
(87) International publication number: WO 94/24503

(56) References cited:
- DE-A- 3 621 323
- FR-A- 2 611 876
- FR-A- 2 627 578
- JP-A- 3 140 791
- JP-B-57 044 916

## Description

The present invention relates to a DC arc furnace for melting scrap or pig iron in cold block form (hereinafter referred to as scrap material).

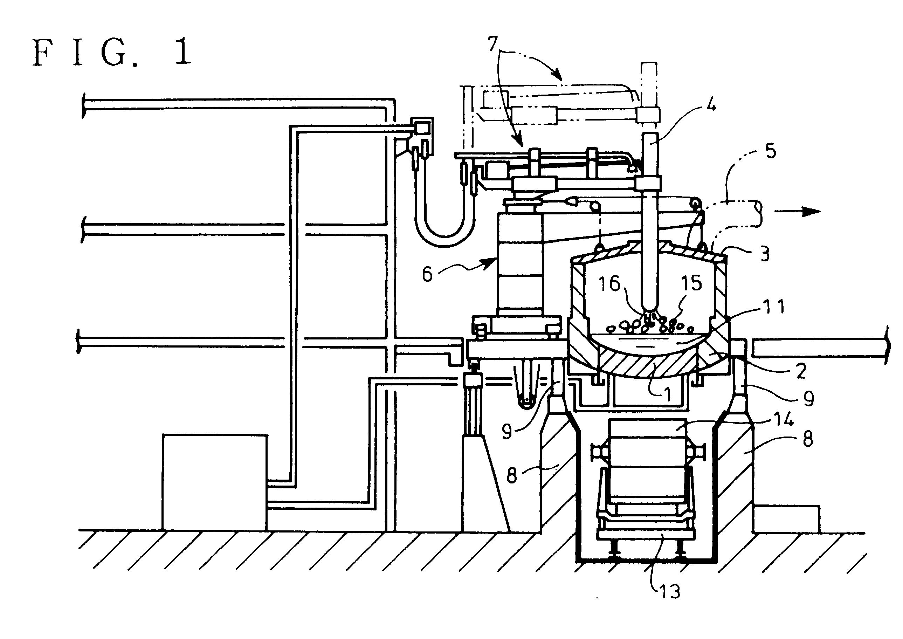

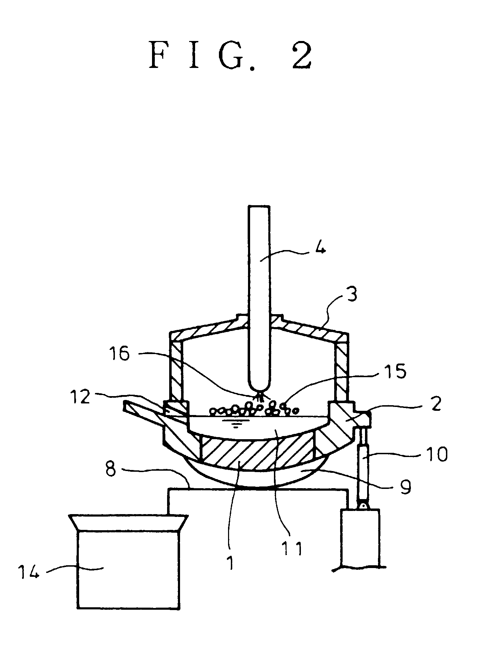

A DC arc furnace for melting scrap material is known which has the construction illustrated in Figures 1 and 2 of the accompanying drawings which are a front sectional view and a side sectional view, respectively, of the known furnace.

The furnace comprises a furnace shell 2 with a lower electrode 1 (anode) at its bottom, a furnace roof 3 adapted to close the upper portion of the furnace shell 2, an upper electrode 4 (cathode) extending vertically through the roof 3 at the centre thereof a dust collecting duct 5 connected to the roof 3, a device 6 for opening and closing the roof 3, which supports the roof so as to be vertically and pivotally movable and a device 7 for raising and lowering the upper electrode 4, which is mounted on the roof opening and closing device 6.

The furnace shell 2 is rockably supported via a rocker 9 by a lower supporting stand 8. When the roof 3 is released, the furnace shell 2 may be tilted by a tilting drive 10 to pour molten steel 11 in the furnace shell 2 out through a spout 12 into a ladle 14 on a ladle carriage 13.

When melting scrap material 15, the roof opening and closing device 6 lifts up the roof 3 and swings it outwardly of the furnace shell 2, thereby opening the top of the furnace shell 2. The scrap material 15, which has been preheated by a preheating device (not shown), arranged at a separate position, is charged into the furnace shell 2 by means of a bucket or the like . The top of the furnace shell 2 is then reclosed with the roof 3. A reduced pressure is then produced in the furnace shell 2 by the dust collecting duct 5 and the upper electrode 4 is lowered to a predetermined position and the electrodes 1 and 4 are energized to generate and maintain an arc 16 to melt the scrap material 15.

However, the weight of the scrap material 15 is small in comparison to the quantity thereof and a desired quantity of molten cannot be obtained in only one melting operation. Therefore, after the completion of one melting operation, the electrodes 1 and 4 are de-energized, the furnace roof 3 is opened and further scrap material is charged into the furnace shell 2. Thus, the scrap material melting operation is repeated several times in the manner described above. Thereafter, the furnace shell 2 is tilted by the drive 10 to pour the molten metal 11 through the spout 12 into the ladle 14.

In the DC arc furnace of the type described above, whenever scrap material is to be charged into the furnace shell 2, the furnace roof 3 is removed. Such removal of the roof 3 causes various adverse problems. High-temperature exhaust gases are discharged outside the furnace shell 2 so that a very large amount of heat is dissipated to the exterior, resulting in a large heat loss. A large quantity of dust is discharged and noise is generated. When additional scrap material 15 is charged into the furnace shell 2, the melting operation is shut down so that there is a loss of arc time and the temperature of the molten metal drops, resulting in a substantial decrease in the melting efficiency.

Moreover, the arc 16 between the scrap material 15 and the upper electrode 4 in the furnace shell 2 may move rapidly over the scrap material so that flickering and/or short circuits occur, resulting in large voltage fluctuations in the power source.

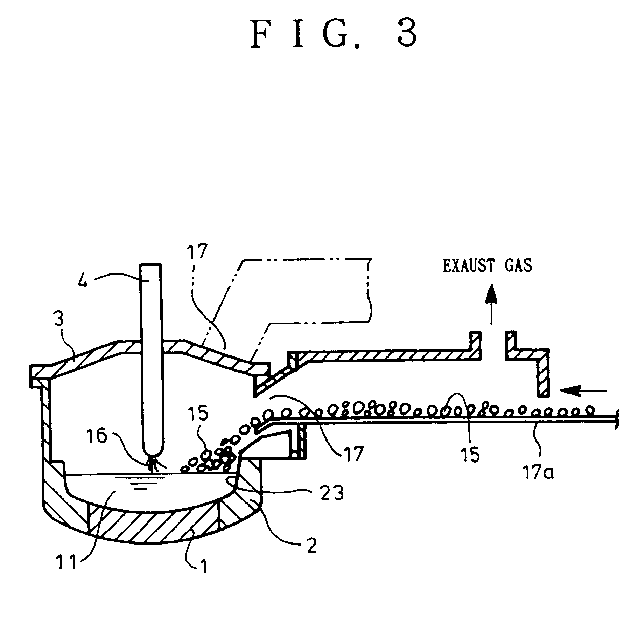

In order to overcome the above-mentioned problems, a continuously charged DC arc furnace has been proposed, the construction of which is shown in Figure 3, which is a sectional view of the furnace. This furnace has a material charging port 17 on one side of the furnace shell 2 or, as shown in phantom, in the furnace roof 3 and adjacent to the upper electrode 4. The scrap material 15 is continuously charged by a delivery device 17a through the charging port 17 into the furnace shell 2 so as to overcome the problems caused by opening and closing of the roof 3 and by flickering.

However, the furnace shown in Figure 3 also suffers from various problems. Since the scrap material 15 is charged laterally of the upper electrode 4, the added scrap material 15 always accumulates in the furnace shell 2 at an offset position, which makes the temperature distribution in the furnace shell 2 asymmetric and either necessitates a separate heating device or a delay in the melting time period is produced due to unmelted scrap material, which substantially reduces the melting efficiency. Moreover, since the melting is mainly effected at an offset position in the furnace shell 2 adjacent to a peripheral wall 23 of the furnace, the furnace shell 2 is subject to non-uniform wear.

FR-A-2611876, on which the precharacterising portion of claim 1 is based, discloses a DC arc furnace comprising a furnace shell with a lower electrode, a furnace roof adapted to close the upper portion of the furnace shell, a material charging port at the centre of the furnace roof and two upper electrodes which are opposed to one another with respect to the charging port and extend through the furnace roof. A material preheating and charging device extends vertically upwardly from the charging port and communicates with an exhaust system. The material to be melted is moved progressively in batches through the preheating and charging device to preheat the batches which are then dropped into the furnace.

DE-A-3621323 discloses a DC arc furnace for melting powdery or pelletised material. The furnace has a lower electrode and a single tubular upper electrode which extends through the furnace roof and through which the material to be melted is introduced into the furnace.

FR-A-2627578 discloses a DC arc furnace for melting powdery material including a lower electrode, a material charging port at the centre of the furnace roof, two upper electrodes, which are opposed to one another with respect to the charging port and extend through the furnace roof. The furnace also has an exhaust system and a preheating chamber in which the material to be melted is preheated with the aid of a proportion of the exhaust gas.

The object of the present invention is to overcome the above problems and to provide a DC arc furnace in which scrap material can be continuously charged between two upper electrodes and the arc between those electrodes is directed to the scrap material at the centre of the furnace shell in order to thereby enhance the efficiency of melting the scrap material, make the furnace shell smaller, prevent the peripheral wall of the furnace shell from being worn and enhance the heat efficiency.

### DISCLOSURE OF THE INVENTION

According to the present invention this object is solved by a DC arc furnace Having the features set forth in claim 1. In use, after a predetermined quantity of scrap material has been charged into the furnace shell and the upper portion thereof closed by the furnace roof, the upper electrodes are lowered to a predetermined position and the lower electrode and the upper electrodes are energized to generate and maintain an arc to melt the material. After melting of the material has progressed to a certain degree, additional material is continuously charged through the material charging port in constant quantities. The material is fed through the material charging port just between the upper electrodes and the arcs from the two upper electrodes are directed to the scrap material which was charged towards the centre of the furnace shell, thereby enhancing the melting efficiency of the material.

In the furnace according to the present invention, the material preheating and charging device is installed above the material charging port so that the scrap material is directly heated by high-temperature exhaust gases from the furnace shell, thereby enhancing the efficiency of melting the material and economising on the charged input to the DC arc furnace, thereby lowering the running costs.

### BRIEF DESCRIPTION OF THE DRAWINGS

Fig. 1 is a front view in section of a conventional DC arc furnace;
Fig. 2 is a side view in section of the furnace of Fig. 1;
Fig. 3 is a sectional view of a conventional continuously charged type DC arc furnace;
Fig. 4 is a side sectional view of one embodiment of the present invention;
Fig. 5 is a view in the direction V-V in Fig. 4; and
Fig. 6 is a view in the direction VI-VI in Fig. 4.

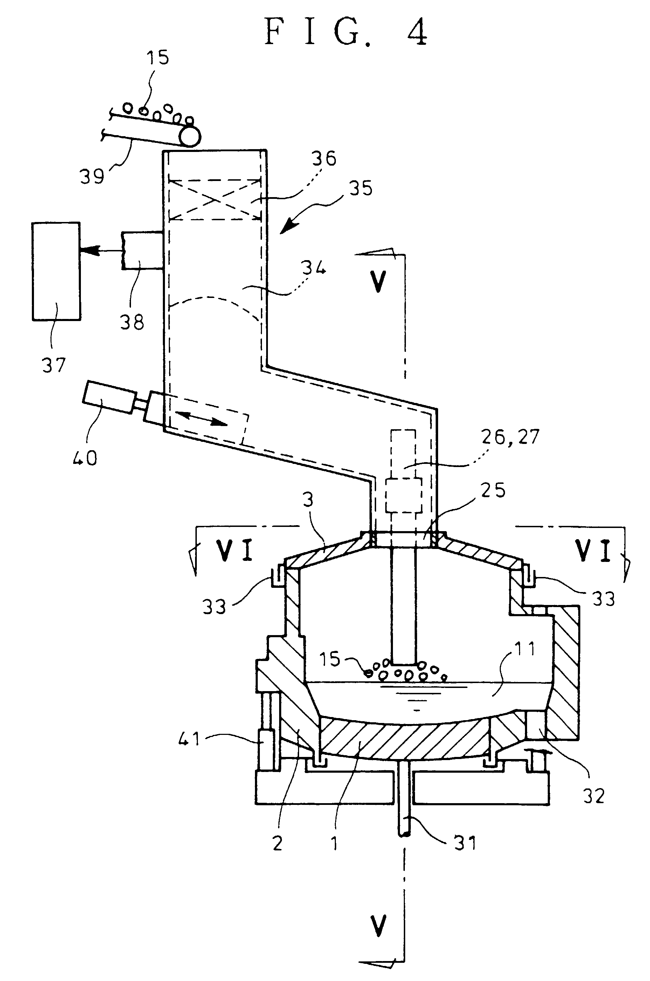

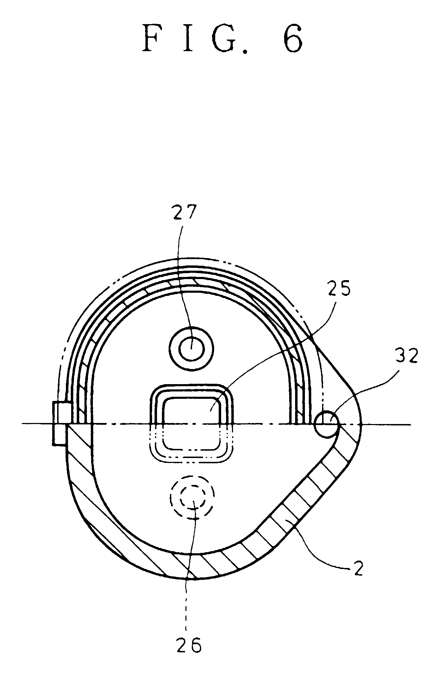

An embodiment of the present invention will be described in conjunction with Figs. 4 to 6 in which those components which are the same as those shown in Figs. 1 to 3 are denoted by the same reference numerals.

A furnace shell 2 of oval cross-section has a lower electrode 1 at its bottom and is closed at its upper portion by a furnace roof 3. A material charging port 25 is formed through the roof 3 substantially at its centre. Two upper electrodes 26 and 27 which are opposed to one another relative to the port 25 in the longitudinal direction of the oval, extend through the roof 3.

The upper electrodes 26 and 27 are supported by respective electrode lifting devices 28 such that they are vertically movable independently of one another. The upper electrodes 26 and 27 are connected through respective upper conductors 29 to a power source 30. The lower electrode 1 is connected through a lower conductor 31 to the power source 30.

The oval furnace shell 2 has a spout 32 on one side perpendicular to the longitudinal direction of the oval which may be blocked by a mud gun or the like. The furnace roof 3 is mounted via sealing means 33 on the furnace shell 2 and may be removed for, e.g. maintenance of the furnace shell 2.

A material preheating and charging device 35 with a packed bed type heat exchanger 34 is arranged above the material charging port 25. Sealing means 36, such as a damper, is arranged above the heat exchanger 34 of the material preheating and charging device 35. A portion of the device 35 below the dealing means 36 is connected through an exhaust pipe 38 to an exhaust system 37 having a heat exchanger, a dust collector, a suction fan and the like. In Fig. 4, reference numeral 39 denotes a material supply device for supplying the scrap material 15 to a portion of the device 35 above the sealing means 36;40, a material charging device for pushing out the scrap material which has been preheated in the heat exchanger 34 to the material charging port 25 so as to effect substantially continuous charging; and 41, a tilting device, such as a cylinder, for tilting the furnace shell 2 for the purpose of maintenance or the like of the furnace shell 2 to discharge all of the molten metal 11 and slag in the furnace shell 2.

When melting the scrap material 15, a predetermined quantity of scrap material 15 is charged into the furnace shell 2, which is closed with the furnace roof 3, and the lower electrode 1 and the upper electrodes 26 and 27 are energized to generate an arc 16 for melting the scrap material 15. After melting of the scrap material 15 has progressed to a certain degree, scrap material 15 is continuously charged through the material charged port 25 in constant volumes. In this case, the scrap material 15 is charged from the material charge port 25 just between the two upper electrodes 27 and 28. Melting therefore progresses with a symmetrical temperature distribution in the furnace shell 2, whereby no unmelted scrap material remains and the melting efficiency is enhanced.

Moreover, the arcs 16 from the electrodes 26 and 27 are directed to the centre of the furnace shell to which the scrap material is charged, whereby the continuously charged scrap material 15 is melted yet more effectively.

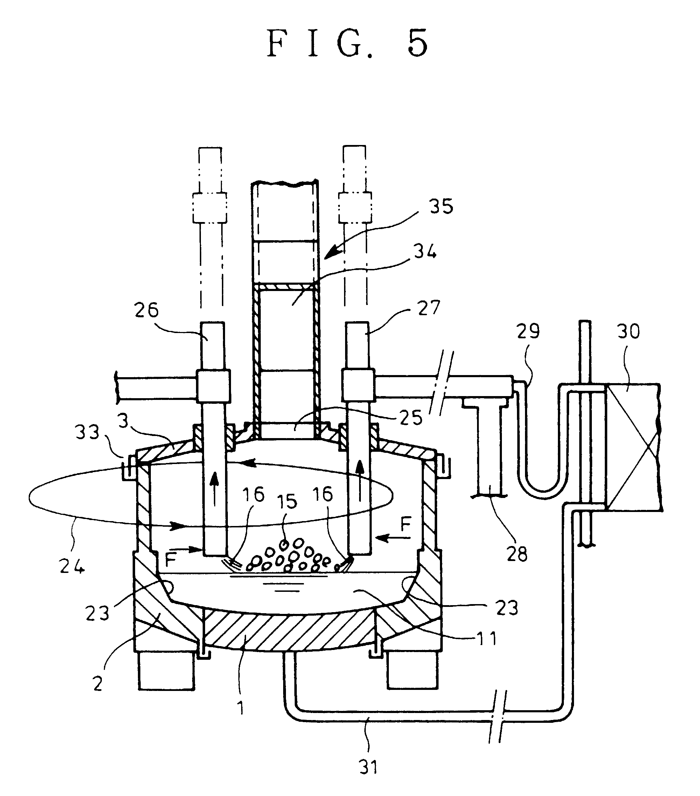

This will be explained more specifically. When electric current flowing through one upper electrode 26 in an upward direction, as shown by the arrow in Fig. 5, a right-handed magnetic field 24 is generated in accordance with right-handed screw rule. With respect to the other upper electrode intersecting the right-handed magnetic field 24, the arc 16 from the other electrode 27 is subjected to a force F directed from right to left in Fig. 5 in accordance with Fleming's left-hand rule, on the basis of the upward direction of the electric current flowing through the electrode 27 and the direction perpendicular to the plane of Fig. 5 and directed from front to rear of the sheet of Fig. 5 of the magnetic field. In the same manner, the arc 16 from the upper electrode 26 intersects the magnetic field 24 generated by the other upper electrode 27 and is subjected to a force F directed from left to right since the magnetic field 24 is directed back to front in the direction perpendicular to the sheet of the figure. As a result, the arcs 16 from the upper electrodes 26 and 27 are mutually directed to the centre of the furnace shell so that scrap material 15 fed to the centre is effectively melted.

The upper electrodes 26 and 27, which are carbon electrodes, are expensive and tend to be rapidly consumed as a result of oxidisation and are, therefore, required to have as small an outer surface area as possible. To this end, in order that the scrap material 15 may be supplied between the upper electrodes, the minimum number of such electrodes, i.e. two, is provided to minimise the consumption of the electrodes.

After the predetermined quantity of scrap material 15 has been melted, the spout 32 is opened by opening means (not shown) to pour out the molten steel 11. In this case, a quantity of molten steel 11 is left at the bottom of the furnace shell 2 so as to assure electrical conductivity in the melting operation.

If maintenance of the furnace shell 2 is required, the upper electrodes 26 and 27 are withdrawn from the furnace roof 3; alternatively, the furnace roof 3 is removed. Then, the furnace shell 2 is tilted by the tilting device 41 to discharge all of the molten steel 11 and molten slag left at the bottom of the furnace shell 2.

According to the embodiment described above, the arcs 16 are directed to the scrap material 15 which is charged at the centre of the furnace shell so that melting of the scrap material 15 can be effected in a shorter time period and more efficiently. Moreover, the temperature distribution in the furnace is symmetrical so that the melting efficiency is further enhanced and wear of the peripheral wall 23 of the furnace is reduced. The arrangement of the material preheating and charging device 35 at the material charge port 25 enables the scrap material 15 to be directly heated by the high-temperature exhaust gas from the furnace shell 2 and charging can be effected continuously without opening or removing the furnace roof 3, which enhances the efficiency of the melting of the scrap material 15 and saves on heat supplied to the furnace, thereby reducing the running costs.

It is to be understood that the present invention is not limited to the above-mentioned embodiment and that various modifications may be made. For example, the furnace shell may be of oval, flat oval, rectangular or other shape. The material preheating and charging device used may be of various types.

## Claims

1. A DC arc furnace for melting scrap or pig iron comprising a furnace shell (2) with a lower electrode (1) at the bottom thereof a furnace roof (3) adapted to close the upper portion of the furnace shell (2), a material charging port (25) situated substantially at the centre of the furnace roof (3), two upper electrodes (26,27) situated laterally opposed to one another on opposite sides of the material charging port (25) and extending vertically through the furnace roof (3), a material preheating and charging device (35) which is situated above the material charging port (25) and communicates with it and in which the material is preheated, an exhaust system (37) arranged to draw exhaust gas from the furnace shell (2) through the material charging port (25) and the material preheating and charging device (35) and a material charging device (40) for moving the material from the material preheating and charging device (35) through the material charging port (25) into the furnace shell, characterised in that the material preheating and charging device (35) comprises a packed bed type heat exchanger and is situated laterally offset from the material charging port (25) and that the material charging device (40) is arranged to push material out of the material preheating and charging device (35) and through the material charging port (25) substantially continously.

## Patentansprüche

1. Gleichstromlichtbogenofen zum Schmelzen von Alt- oder Roheisen, mit einem Ofenmantel (2), der an seinem Boden eine untere Elektrode (1) aufweist, einem Ofengewölbe (3), das so beschaffen ist, daß es den oberen Abschnitt des Ofenmantels (2) verschließt, einer Materialbeschickungsöffnung (25), die sich im wesentlichen in der Mitte des Ofengewölbes (3) befindet, zwei oberen Elektroden (26, 27), die sich auf gegenüberliegenden Seiten der Materialbeschickungsöffnung (25) seitlich einander gegenüber befinden und sich vertikal durch das Ofengewölbe (3) erstrecken, einer Materialvorheiz- und Materialbeschickungsvorrichtung (35), die sich über der Materialbeschickungsöffnung (25) befindet und mit dieser in Verbindung steht und in der das Material vorgeheizt wird, einem Abgassystem (37), das so beschaffen ist, daß es das Abgas vom Ofenmantel (2) durch die Materialbeschickungsöffnung (25) und die Materialvorheiz- und Materialbeschickungsvorrichtung (35) ansaugt, und einer Materialbeschickungsvorrichtung (40), die das Material von der Materialvorheiz- und Materialbeschickungsvorrichtung (35) durch die Materialbeschickungsöffnung (25) in den Ofenmantel bewegt, dadurch gekennzeichnet, daß die Materialvorheiz- und Materialbeschickungsvorrichtung (35) einen Festbett-Wärmetauscher enthält und von der Materialbeschickungsöffnung (25) seitlich versetzt angeordnet ist und daß die Materialbeschickungsvorrichtung (40) so beschaffen ist, daß sie im wesentlichen kontinuierlich Material aus der Materialvorheiz- und Materialbeschikkungsvorrichtung (35) heraus und durch die Materialbeschickungsöffnung (25) schiebt.

## Revendications

1. Four à arc à courant continu destiné à la fusion de ferrailles ou de fonte en gueuses, comprenant une enveloppe de four (2) comportant une électrode inférieure (1) au niveau du fond de celle-ci, un toit de four (3) conçu pour refermer la partie supérieure de l'enveloppe du four (2), un orifice de chargement de matériau (25) situé pratiquement au centre du toit du four (3), deux électrodes supérieures (26, 27) situées de façon latéralement opposées l'une à l'autre sur des côtés opposés de l'orifice de chargement de matériau (25) et s'étendant verticalement à travers le toit du four (3), un dispositif de préchauffage et de chargement de matériau (35) qui est situé au-dessus de l'orifice de chargement de matériau (25) et communique avec lui, et dans lequel le matériau est préchauffé, un système d'évacuation (37) conçu pour aspirer les gaz d'évacuation provenant de l'enveloppe du four (2) au travers de l'orifice de chargement de matériau (25) et du dispositif de préchauffage et de chargement de matériau (35), et un dispositif de chargement de matériau (40) destiné à déplacer le matériau depuis le dispositif de préchauffage et de chargement de matériau (35), à travers l'orifice de chargement de matériau (25), jusqu'à l'enveloppe du four, caractérisé en ce que le dispositif de préchauffage et de chargement de matériau (35) comprend un échangeur de chaleur du type à lit tassé et est situé de façon décalée latéralement par rapport à l'orifice de chargement de matériau (25), et en ce que le dispositif de chargement de matériau (40) est conçu pour repousser le matériau hors du dispositif de préchauffage et de chargement de matériau (35) et à travers l'orifice de chargement de matériau (25) de façon pratiquement continue.
